(19) **Europäisches Patentamt**

**European Patent Office**

**Office européen des brevets**

(11) **EP 1 505 387 B1**

(12) **EUROPÄISCHE PATENTSCHRIFT**

(45) Veröffentlichungstag und Bekanntmachung des Hinweises auf die Patenterteilung:
**06.12.2006 Patentblatt 2006/49**

(51) Int Cl.:
***G01N 27/22*** *(2006.01)*

(21) Anmeldenummer: **04015965.9**

(22) Anmeldetag: **07.07.2004**

(54) **Verfahren und Anordnung zur Feuchtemessung**

Humidity measuring device and method

Dispositif et procédé pour la mesure de l'humidité

(84) Benannte Vertragsstaaten:
**AT BE BG CH CY CZ DE DK EE ES FI FR GB GR HU IE IT LI LU MC NL PL PT RO SE SI SK TR**

(30) Priorität: **02.08.2003 DE 10335553**

(43) Veröffentlichungstag der Anmeldung:
**09.02.2005 Patentblatt 2005/06**

(73) Patentinhaber: **E+E Elektronik Ges. Mbh**
**4209 Engerwitzdorf (AT)**

(72) Erfinder: **Mitter, Helmut**
**4202 Hellmonsödt (AT)**

(74) Vertreter: **Hofmann, Ernst**
**Dr. Johannes Heidenhain GmbH,**
**Patentabteilung,**
**Postfach 12 60**
**83292 Traunreut (DE)**

(56) Entgegenhaltungen:
**EP-A- 0 801 302       DE-C- 19 729 697**
**GB-A- 2 011 093       GB-A- 2 047 431**
**GB-A- 2 323 928       US-A- 3 810 389**
**US-A- 4 794 323**

- **PATENT ABSTRACTS OF JAPAN Bd. 1995, Nr. 09, 31. Oktober 1995 (1995-10-31) & JP 7 146273 A (GLORY LTD), 6. Juni 1995 (1995-06-06)**
- **PATENT ABSTRACTS OF JAPAN Bd. 0181, Nr. 94 (P-1722), 5. April 1994 (1994-04-05) & JP 6 003312 A (GLORY LTD), 11. Januar 1994 (1994-01-11)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren sowie eine Anordnung zur Feuchtemessung nach dem Oberbegriff des Anspruches 1 bzw. nach dem Oberbegriff des Anspruches 11.

Bei der relativen Feuchtemessung mittels Sensoranordnungen mit kapazitiven Feuchtesensorelementen treten im Hochfeuchtebereich (rH > 95%) oftmals Fehlmessungen auf. Insbesondere werden hierbei mitunter zu hohe relative Feuchtemesswerte angezeigt. Für diesen Effekt können eine Reihe von Ursachen verantwortlich sein, beispielsweise das allgemeine Aufsättigungsverhalten der Feuchtesensorelemente, die beginnende Kondensation und die sich daraus ergebenden Kurzschlüsse an den Kontakten der Feuchtesensorelemente etc..

Aus der EP 0 801 302 A1 ist ein Verfahren sowie eine Anordnung zur Bestimmung der Absolutfeuchte bekannt, bei der ab einem bestimmten Feuchtigkeitsgrenzwert, in einem Heizbetrieb gearbeitet wird. Im Heizbetrieb wird die Temperatur des verwendeten kapazitiven Feuchtesensorelementes auf eine konstante Feuchtesensorkapazität geregelt. Dies geschieht in diesem Messbereich, d.h. im Hochfeuchtebereich, durch geeignetes Heizen des Feuchtesensorelementes mit einem Temperatursensorelement, das in der Sensoranordnung benachbart zum Feuchtesensorelement angeordnet ist. Im Hochfeuchtebereich lässt sich dann aus dem gemessenen Heizstrom und der bekannten Kapazität des Feuchtesensorelementes die jeweilige absolute Feuchte ermitteln. Um zusätzlich zur absoluten Feuchte im Bedarfsfall noch die jeweilige relative Feuchte rH ermitteln zu können - die in verschiedensten Applikationen die gewünschte Messgröße darstellt - ist ferner die Kenntnis der Umgebungstemperatur $T_a$ erforderlich. Dies bedeutet, dass ein weiteres Bauelement in Form eines Temperatursensors zur Messung der Umgebungstemperatur $T_a$ notwendig wird. Es resultiert somit ein gesteigerter Gesamtaufwand innerhalb der bekannten Anordnung, wenn neben bzw. anstelle der absoluten Feuchte auch die relative Feuchte rH als Messgröße benötigt wird.

Aufgabe der vorliegenden Erfindung ist es daher, ein Verfahren sowie eine Anordnung zur Feuchtemessung zu schaffen, um mit möglichst geringem Gesamtaufwand auch im Hochfeuchte-Bereich eine zuverlässige Bestimmung der relativen Feuchte zu ermöglichen.

Die erste angegebene Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Die zweite aufgeführte Aufgabe wird durch eine Anordnung mit den Merkmalen des Anspruches 11 gelöst.

Vorteilhafte Ausführungsformen der erfindungsgemäßen Anordnung ergeben sich aus den Maßnahmen, die in den von Anspruch 11 abhängigen Patentansprüchen aufgeführt sind.

Erfindungsgemäß ist nunmehr vorgesehen, die Umgebungstemperatur nicht mittels eines separaten Temperatursensorelementes zu ermitteln, sondern diese aus der im Heizbetrieb erforderlichen Heizleistung und der lokalen Sensoranordnungstemperatur abzuleiten. Als Messgröße zur Ermittlung der Heizleistung dient der jeweilige Messstrom durch das verwendete Heizelement.

Als Vorteil erübrigt sich aufgrund des erfindungsgemäßen Vorgehens demzufolge das Vorsehen eines separaten Temperatursensorelementes, um die Umgebungstemperatur zu bestimmen. Gleichzeitig ist aufgrund des Heizbetriebes zumindest im Hochfeuchtebereich sichergestellt, dass eine korrekte Bestimmung der relativen Feuchte resultiert.

Im Rahmen des erfindungsgemäßen Verfahrens bzw. der erfindungsgemäßen Anordnung ergeben sich verschiedene Ausführungsmöglichkeiten.

So ist bei der erfindungsgemäßen Anordnung in einer bevorzugten Minimalkonfiguration einer geeigneten Sensoranordnung lediglich ein kapazitives Feuchtesensorelement sowie ein Temperatursensorelement vorgesehen, wobei letzteres gleichzeitig zum Heizen bzw. als Heizelement genutzt wird. Grundsätzlich kann aber auch vorgesehen werden, die Funktionalität des Temperatursensorelementes und des Heizelementes auf zwei separate Bauelemente in der Sensoranordnung zu verteilen. In Bezug auf die hardwaremäßige Ausgestaltung der Sensoranordnung gibt es demzufolge im Rahmen der vorliegenden Erfindung eine Reihe von Möglichkeiten.

Ferner ergeben sich im Rahmen des erfindungsgemäßen Verfahrens unterschiedliche Möglichkeiten in Bezug auf die konkrete Ausgestaltung des Heizbetriebs. So kann etwa wie in der o.g. EP 0 801 302 A1 vorgesehen werden, ab einem bestimmten Feuchtigkeitsgrenzwert das Feuchtesensorelement derart geregelt zu beheizen, dass in diesem Messbereich stets eine konstante Kapazität des Feuchtesensorelementes resultiert. Alternativ hierzu ist es aber auch möglich, das Feuchtesensorelement ab einem definierten Feuchtigkeitsgrenzwert mit einem Heizstrom zu beheizen, der mit der relativen Feuchte in diesem Messbereich linear ansteigt. Femer wäre es auch denkbar, das Feuchtesensorelement im gesamten Messbereich zu beheizen, was hierbei auch ungeregelt erfolgen könnte.

Die verschiedenen Ausführungsvarianten der Sensoranordnung lassen sich selbstverständlich mit den verschiedenen Varianten des erfindungsgemäßen Verfahrens in vielfältigster Art und Weise kombinieren.

Weitere Vorteile sowie Einzelheiten der vorliegenden Erfindung ergeben sich aus der nachfolgenden Beschreibung von Ausführungsbeispielen anhand der beiliegenden Figuren.

Dabei zeigt

Figur 1          ein schematisiertes Blockschaltbild eines Ausführungsbeispiels der erfindungsgemäßen Anordnung;

Figur 2a - 2c    verschiedene Diagramme zur Erläuterung einer ersten Ausführungsform des erfindungsgemäßen Verfahrens;

Figur 3a - 3c    verschiedene Diagramme zur Erläuterung einer zweiten Ausführungsform des erfindungsgemäßen Verfahrens;

Figur 4a - 4c    verschiedene Diagramme zur Erläuterung einer dritten Ausführungsform des erfindungsgemäßen Verfahrens.

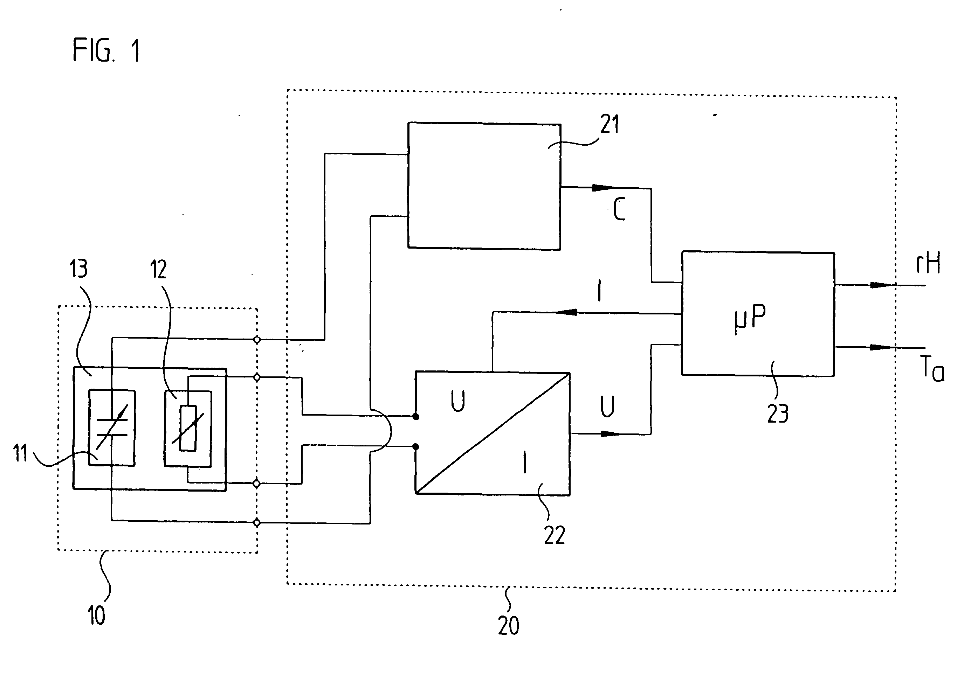

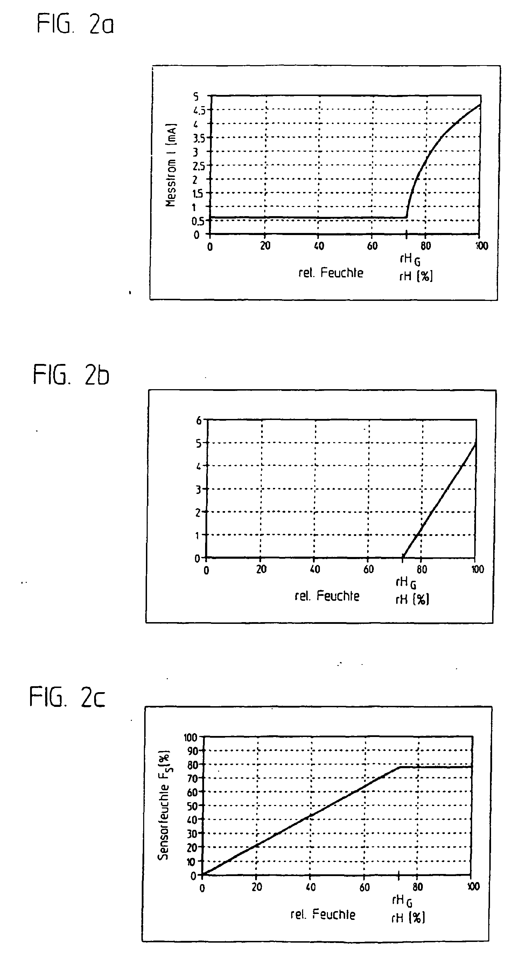

In Figur 1 ist ein stark schematisiertes Blockschaltbild einer ersten Ausführungsform der erfindungsgemäßen Anordnung dargestellt. Im Anschluss seien kurz die dargestellten Komponenten erläutert, während nachfolgend in Verbindung mit den Figuren 2a - 2c, 3a - 3c, 4a - 4c das erfindungsgemäße Verfahren bzw. die zur Durchführung geeignete Anordnung und verschiedene Ausführungsmöglichkeiten derselben im Detail beschrieben wird.

Die erfindungsgemäße Anordnung umfasst mit der Sensoranordnung 10 und der nachgeordneten Folgeelektronik 20 im wesentlichen zwei Funktionseinheiten bzw. Funktionsblöcke. Auf Seiten der Sensoranordnung 10 ist im dargestellten Beispiel ein Feuchtesensorelement 11 sowie ein Temperatursensorelement 12 vorgesehen, die auf einem gemeinsamen Trägersubstrat 13 angeordnet sind. Das Feuchtesensorelement 11 ist als kapazitives Feuchtesensorelement ausgebildet, bestehend aus zwei flächigen Elektroden, zwischen denen z.B. ein Polymer als Dielektrikum angeordnet ist, dessen Kapazität sich feuchteabhängig ändert. Das Temperatursensorelement 12 ist als resistives Sensorelement ausgebildet und besteht im wesentlichen aus einem Widerstand mit linearer Temperatur-Widerstandscharakteristik, um auf bekannte Art und Weise über die Widerstandsmessung die Temperatur der Sensoranordnung zu bestimmen. Beide Sensorelemente 11, 12 sind vorzugsweise auf einem Trägersubstrat 13 angeordnet, welches als dünnes Glasplättchen ausgebildet ist.

Im dargestellten Ausführungsbeispiel fungiert das Temperatursensorelement 12 auf Seiten der Sensoranordnung 10 des weiteren auch als Heizelement, um im nachfolgend noch detailliert erläuterten Messbetrieb die Sensoranordnung in einem gewählten Messbereich zu heizen. In anderen Worten ausgedrückt, stellt das Blockschaltbild gemäß Figur 1 somit die Minimalkonfiguration der erfindungsgemäßen Anordnung dar.

In einer konkreten Ausführungsform wäre hierbei etwa eine sog. Sandwich-Konstruktion vorgesehen, die einen kapazitiven Feuchtesensor auf einem Glas-Trägersubstrat sowie einen handelsüblichen Pt-Temperatursensor auf einem Keramik-Trägersubstrat umfasst, wobei die beiden Trägersubstrat-Rückseiten wärmeleitend aneinandergeklebt würden.

Grundsätzlich könnte im Rahmen der vorliegenden Erfindung auch alternativ vorgesehen werden, neben dem Temperatursensorelement 12 ein separates Heizelement auf Seiten der Sensoranordnung 10 zu verwenden. Dieses könnte beispielsweise ebenfalls als Widerstand ausgebildet werden und auf dem Trägersubstrat 13 angeordnet sein. In diesem Fall würde das Temperatursensorelement stets mit einem kleinen Messstrom betrieben und darüber die Temperaturmessung vorgenommen; das separate Heizelement würde je nach Betriebszustand mit einem definierten Heizstrom betrieben und würde demzufolge lediglich die Heizfunktionalität übernehmen.

Der Sensoranordnung 10 nachgeordnet ist eine Folgeelektronik 20 vorgesehen, von der in Fig. 1 ebenfalls nur einige Funktionsblöcke schematisiert angedeutet sind. So ist mit dem Bezugszeichen 21 eine Kapazitätsbestimmungs-Einheit in Form eines Kapazitätsmesskreises bezeichnet, die mit dem kapazitiven Feuchtesensorelement 11 verbunden ist und in bekannter Art und Weise zur Messung der jeweiligen Kapazität dient, die in definiertem Zusammenhang mit der jeweiligen Feuchte steht. Die jeweils ermittelte Kapazität C wird von der Kapazitätsbestimmungs-Einheit 21 zur Weiterverarbeitung an einen nachgeordneten Mikroprozessor 23 übergeben.

Mit dem Bezugszeichen 22 ist auf Seiten der Folgeelektronik 20 ferner eine Einheit bezeichnet, die mit dem resistiven Temperatursensorelement 12 respektive Heizelement verbunden ist. Die Einheit 22 ist als hierbei als geregelte Stromquelle zum Versorgen des Heizelementes mit einem Heizstrom ausgebildet und ermöglicht ferner eine Spannungsmessung über dem resistiven Temperatursensorelement 12, um so die Temperatur der Sensoranordnung zu ermitteln. Zur definierten Regelung des Heizstromes durch die Vorgabe eines Soll-Heizstromes I bzw. dem Übergeben der ermittelten Spannungswerte U zu Temperaturmesszwecken ist die Einheit 22 ebenfalls mit dem nachgeordneten Mikroprozessor 23 verbunden.

Der Mikroprozessor 23 steuert somit die Einheit 22 zur Vorgabe eines Heizstromes an, verarbeitet die verschiedenen Messdaten in der nachfolgend beschriebenen Art und Weise und stellt ausgangsseitig Signale bzgl. der Umgebungstemperatur $T_a$ sowie der relativen Feuchte rH zur Verfügung.

Diese können anschließend in einer - nicht dargestellten - Auswerteeinheit applikationsspezifisch weiterverarbeitet werden.

Anhand der Figuren 2a - 2c sei nunmehr in Verbindung mit Figur 1 eine erste Ausführungsform des erfindungsgemäßen Verfahrens im Detail beschrieben. In der ersten Variante des erfindungsgemäßen Verfahrens wird hierbei vorgesehen, ab einem vorgegebenen Feuchtigkeitsgrenzwert $rH_G$ in einem Heizbetrieb zu arbeiten, d.h. die Sensoranordnung über das Heizelement zu heizen. Die Heizung erfolgt hierbei so, dass das Feuchtesensorelement derart geregelt beheizt wird, dass im Heizbetrieb stets eine konstante Kapazität des Feuchtesensorelementes resultiert. Dies erfolgt mit steigender relativer Feuchte rH durch ein entsprechend geregeltes Erhöhen des Heizstromes $I_H$ durch das verwendete Heizelement. Im Fall der Verwendung eines kombinierten Temperatursensor- und Heizelementes entspricht der erforderliche Heizstrom $I_H$ auch dem jeweiligen Messstrom $I_M$, d.h. $I_H = I_M = I$, so dass in diesem Fall nachfolgend nur vom Heizstrom- bzw. Messstrom I gesprochen wird.

Als Feuchtigkeitsgrenzwert $rH_G$ wird im vorliegenden Beispiel eine relative Feuchte $rH_G = 75\%$ vorgesehen, ab der im geregelten Heizbetrieb gearbeitet wird. In Figur 2a, die den Verlauf des Messstroms I gegenüber der relativen Feuchte rH zeigt, ist dargestellt, wie der bis zu einem Feuchtigkeitsgrenzwert $rH_G = 75\%$ konstante Heizstrom I anschließend definiert bzw. geregelt erhöht wird, um eine konstante Kapazität C des Feuchtesensorelementes sicherzustellen.

Um nunmehr ohne weiteres Sensorelement auch die gewünschte Umgebungstemperatur $T_a$ bestimmen zu können, wird erfindungsgemäß ausgenutzt, dass im Heizbetrieb die aufzubringende Heizleistung für den Temperatursensor bzw. das Heizelement und die daraus resultierende Übertemperatur $T_ü$ proportional zur Temperaturdifferenz zwischen der Sensoranordnungstemperatur $T_S$ und der Umgebungstemperatur $T_a$ ist. Über die Folgeelektronik wird demzufolge aus der im Heizbetrieb erforderlichen Heizleistung sowie der gemessenen lokalen Sensoranordnungstemperatur $T_S$ ferner die Umgebungstemperatur $T_a$ ermittelt, um darüber dann schließlich die relative Feuchte rH zu bestimmen. Es gilt:

$$T_a = T_S - T_ü \qquad (Gl. 1)$$

mit

$T_a$ := Umgebungstemperatur

$T_S$ := gemessene Sensoranordnungstemperatur

$T_ü$ := Übertemperatur des Heizelementes, resultierend aus der anliegenden Heizleistung im Heizbetrieb

In Figur 2b ist der Zusammenhang zwischen der Übertemperatur $T_ü$ des Heizelementes und der relativen Feuchte veranschaulicht. Wie ersichtlich, steigt ab dem Feuchtigkeitsgrenzwert $rH_G$ und dem Beginn des Heizbetriebes die resultierende Übertemperatur, d.h. das Temperatursensorelement erwärmt sich aufgrund des fließenden Heizstromes I.

Figur 2c zeigt schließlich die Sensorfeuchte $F_S$, aufgetragen gegenüber der relativen Feuchte rH. Wie ersichtlich erfolgt in dieser Ausführungsform des erfindungsgemäßen Verfahrens eine Regelung ab dem Feuchtigkeitsgrenzwert $rH_G$ im Heizbetrieb auf konstante Sensorfeuchte $F_S = 75\%$, d.h. letztlich auf eine konstante Kapazität C des verwendeten kapazitiven Feuchtesensorelementes.

Nachfolgend sei im Detail und anhand eines konkreten Beispiels erläutert, wie sich auf Grundlage von Gl. (1) und den verschiedenen erfassten Messgrößen die Umgebungstemperatur $T_a$ und hieraus die letztlich gewünschte relative Feuchte rH insbesondere im Hochfeuchtebereich ermitteln lässt.

Ausgegangen sei hierbei von einem bekannten resistiven Temperatursensorelement, z.B. ein Pt1000-Element, dessen Temperatur-Widerstands-Charakteristik in einer linearen Näherung durch folgende Funktion beschrieben werden kann:

$$R = R_S * (1+TK * T) \qquad (Gl. 2.1)$$

mit

R := Temperatursensorwiderstand bei der Temperatur T [°C] in [Ω]

$R_S$ := Temperatursensorwiderstand bei 0°C in [Ω]

TK := Temperaturkoeffizient in [ppm/°C]

T : Messtemperatur

Die Messtemperatur T ergibt sich aus dem Temperatursensorwiderstand R demzufolge gemäß

$$T = (R/R_S -1) / TK \qquad (Gl. 2.2)$$

Typische Werte für ein Pt1000-Temperatursensorelement sind:

Rs = 1000 Ω
TK = 3850 ppm/°C = 0.00385 1/°C

Bei einer Umgebungstemperatur $T_a$ = 23°C erhält man dann beispielsweise einen Temperatursensorwiderstand R = 1088.55 Ohm

Der Widerstandswert R des Temperatursensorelements wird üblicherweise durch eine Strom-/Spannungs-Messung bestimmt, wobei im Normalfall der Messstrom I so klein gewählt wird, dass aufgrund der Verlustleistung am Temperatursensorelement keine signifikante Erwärmung auftritt. Bei einem Messstrom von z.B. I = 700 µA ergibt sich eine Messspannung U bei 23°C von U = 0.761985 V

Tatsächlich hat man durch die Messung mit dem kleinen Strom von I = 700 µA bereits eine Verlustleistung von P = 0.533 mW welche bei einem typischen Eigenerwärmungskoeffizienten von EK = 200 °C/W bereits zu einer Eigenerwärmung bzw. Übertemperatur $T_ü$ von etwa 0.1 °C führt. Diese wird die in klassischen Feuchtemesssystemen allerdings meist vernachlässigt oder aber systematisch wegkalibriert.

Wenn man nun die Eigenerwärmung des Temperatursensorelementes durch den Messstrom mitberücksichtigt, so muss in Gl. (2.1) ein zusätzlicher Term für die resultierende Eigenerwärmung eingeführt werden. Der Widerstand R des Temperatursensors bei einer Umgebungstemperatur $T_a$ ergibt sich dann folgendermaßen :

$$R = R_S * (1+TK * (T_a+T_ü)), \qquad (Gl.\ 2.3)$$

mit
R := Temperatursensorwiderstand bei der Temperatur T [°C] in [Ω]
$R_S$ := Temperatursensorwiderstand bei 0°C in [Ω]
TK := Temperaturkoeffizient in [ppm/°C]
$T_a$ := Umgebungstemperatur in [°C]
$T_ü$ := Übertemperatur des Temperatursensorelementes in [°C]

Die Übertemperatur $T_ü$ des Temperatursensorelementes ergibt sich wiederum folgendermaßen aus den verschiedenen Messgrößen:

$$T_ü = P * EK = U * I * EK = I^2 * R * EK, \qquad (Gl.\ 2.4)$$

wobei:
P := Heizleistung in [W]
EK := Eigenerwärmungskoeffizient des Temperatursensorelements in [°C/W]
U := Messspannung in [V]
I := Messstrom in [A]
R := Temperatursensorwiderstand in [Ω]

Die resultierende Übertemperatur $T_ü$ hängt ihrerseits wieder mit dem Temperatursensorwiderstand R zusammen, so dass sich Einsetzen von Gl. 2.4 in Gl. 2.3 und entsprechendes Umformen ergibt:

$$R \qquad = \qquad R_S * (1 + TK * (T_a + I^2 * R * EK))$$

$$= \qquad R_S * (1 + TK * T_a) + (R_S * TK * I^2 * R * EK) \qquad (Gl.\ 2.5)$$

bzw.

$$R * (1 - R_S * TK * I^2 * EK) = R_S * (1 + TK * T_a) \qquad (Gl.\ 2.5')$$

Aus Gl. (2.5') wiederum ergibt sich der Temperatursensorwiderstand R bei der Umgebungstemperatur $T_a$ folgendermaßen:

$$'R = [R_S * (1 + TK * T_a)] / [(1 - R_S * TK * I^2 * EK)] \qquad (Gl.\ 2.6)$$

Umgekehrt lässt sich aus Gl. 2.6 durch Auflösen nach $T_a$ die gesuchte Umgebungstemperatur $T_a$ aus der Messgröße Messstrom I und dem Eigenerwärmungskoeffizienten EK folgendermaßen ermitteln:

$$T_a = [(R/R_S) * (1 - R_S * TK * I^2 * EK) - 1] * 1/TK \qquad (Gl.\ 2.7)$$

bzw.

$$T_a = [((R/R_S) - 1) * 1/TK] - [(R/R_S) * (1/TK) * R_S * TK * I^2 * EK] =$$

$$= [((R/R_S) - 1) * 1/TK] - [R * TK * I^2 * EK] \qquad (Gl.\ 2.7')$$

$$= T_S - T_{\ddot{u}}$$

Der erste Term $T_S$ in Gl. 2.7' gibt somit die Temperatur des Temperatursensorelementes an, wie sie sich aus dem gemessenen Widerstand R errechnet; der zweite, negative Term gibt hingegen die Übertemperatur $T_{\ddot{u}}$ an, die aus der Verlustleisturig am Widerstand R bei einem Messstrom I auftritt.

Nachfolgend sei auf Grundlage der hergeleiteten Beziehungen die Bestimmung der Umgebungstemperatur $T_a$ anhand eines Beispiels erläutert. Ausgegangen sei hierbei von einem Eigenerwärmungskoeffizienten des Temperatursensorelementes EK = 200°C/W und einer herrschenden Umgebungstemperatur $T_a$ = 23°C.

Über einem Feuchtigkeitsgrenzwert $rH_G$ = 75% wird der Messstrom I auf I = 5mA erhöht, was etwa eine Aufheizung der Sensoranordnung um ca. 5°C zur Folge hat. Exakt ergeben sich unter Verwendung der obigen Gleichungen folgende Werte:

Ermittelte Messspannung U = 5.44275V
Verwendeter Messstrom I = 5mA
=>R= 1109.92 $\Omega$

Aus dem bestimmten Widerstand R ergibt sich dann eine Temperatur des Temperatursensorelementes $T_S$ = 28.55°C.

Aus Gl. 2.4 ergibt sich mit dem Widerstandswert R = 1109.92$\Omega$, dem Messstrom I = 5mA und dem angegebenen Eigenerwärmungskoeffizienten EK = 0.2°C/mW eine Übertemperatur $T_{\ddot{u}}$ = 5.55°C.

Aus Gl. (1), d.h. aus $T_a = T_S - T_{\ddot{u}}$, ergibt sich dann die (korrekte) Umgebungstemperatur $T_a$ = 23°C.

Auf die erläuterte Art und Weise lässt sich somit die Umgebungstemperatur $T_a$ erfindungsgemäß bestimmen und zur Ermittlung der gewünschten relativen Feuchte rH heranziehen; dies sei nachfolgend erläutert.

Die relative Feuchte rH ist gegeben als das Verhältnis von vorhandenem Wasserdampfpartialdruck e zum bei der Temperatur $T_a$ maximal möglichen Sättigungsdampfdruck $e_w$ in [%]:

$$rH = e/e_w * 100\ [\%] \qquad (Gl.\ 3)$$

Der vorhandene Wasserdampfpartialdruck e ist unabhängig von der lokalen Gastemperatur und kann z.B. mittels der bekannten Magnusformeln über die Taupunkttemperatur $T_d$ beschrieben werden:

$$e = A * \exp[m*T_d/(T_n+T_d)] \quad (Gl.\ 4)$$

mit den (Magnus-) Parametern
A=6.112 m=17.62 $T_n$ = 243.12
Entsprechend kann die Sättigungsfeuchte $e_w$ bei einer Temperatur $T_a$ berechnet werden gemäß:

$$e_w = A * \exp[m*T_a/(T_n+T_a)] \quad (Gl.\ 5)$$

Grundsätzlich ist der vorhandene Wasserdampfpartialdruck e unabhängig von der Gastemperatur, solange keine Kondensation eintritt; entsprechend ist die Taupunkttemperatur definiert als jene Temperatur auf welche ein feuchtes Gas (feuchte Luft) abgekühlt werden muss, damit Kondensation auftritt.

Speziell ist der Wasserdampfpartialdruck e und damit $T_d$ auch unabhängig von der lokalen Temperatur am Feuchtesensorelement. Was sich bei Erwärmung eines Feuchtesensorelementes ändert (entsprechend der vorliegenden Erfindung) ist die lokale relative Feuchte, da sich durch die Erwärmung auch der lokale Sättigungsdampfdruck am Feuchtesensorelement ändert.

Im weiteren Verlauf der Beschreibung seien folgende Definitionen verwendet:

$$rH = e/e_w * 100\ [\%] \quad = \text{relative Feuchte des jeweiligen Gases} \quad (Gl.\ 6.1)$$

$$rH_s = e/e_{w.s} * 100\ [\%] = \text{relative Feuchte am Ort des Sensors} \quad (Gl.\ 6.1)$$

$$e_w = A * \exp[m * T_a/(T_n+T_a)] = \text{Sättigungsdampfdruck bei Umgebungstemperatur } T_a \quad (Gl.\ 6.3)$$

$$e_{w.s} = A * \exp[m * T_s/(T_n+T_s)] = \text{Sättigungsdampfdruck bei Sensortemperatur } T_s \quad (Gl.\ 6.4)$$

Durch Messung der Sensortemperatur $T_s$ und der relativen Feuchte $rH_s$ am Ort des Sensors lässt sich der vorhandene Wasserdampfpartialdruck e und die Taupunkttemperatur $T_d$ somit folgendermaßen berechnen:

$$e_{w.s} = A * \exp[m * T_s/(T_n+T_s)]$$

$$e = rH_s * e_{w.s}/100 \quad (Gl.\ 6.5)$$

$$T_d = T_n * \ln(e/A)/[m*\ln(e/A)] \qquad \text{(Gl. 6.6)}$$

Durch die erfindungsgemäße Bestimmung der Umgebungstemperatur $T_a$ lässt sich über den Sättigungsdampfdruck $e_w$ bei Umgebungstemperatur $T_a$ die tatsächliche vorhandene Luftfeuchte rH berechnen :

$$e_w = A * \exp[m * T_a/(T_n+T_a)] \qquad \text{(Gl. 6.3)}$$

$$rH = e/e_w * 100 \ [\%] \qquad \text{(Gl. 3)}$$

Die erläuterten Schritte zur Ermittlung der Umgebungstemperatur bzw. der relativen Feuchte rH aus den verschiedenen Messgrößen erfolgen in der erfindungsgemäßen Anordnung über die Folgeelektronik und deren oben erläuterte Funktionseinheiten. Das heißt, die Folgeelektronik ist entsprechend ausgebildet, um aus der im Heizbetrieb erforderlichen Heizleistung sowie der gemessenen lokalen Sensoranordnungstemperatur ferner die Umgebungstemperatur zu ermitteln, um darüber letztlich die relative Feuchte zu bestimmen. Ausgabeseitig stellt diese dann beispielsweise sowohl den ermittelten Wert für die relative Feuchte rH als auch die ermittelte Umgebungstemperatur $T_a$ zur Weiterverarbeitung zur Verfügung.

Alternativ zum erläuterten Verfahren gemäß den Figuren 2a - 2c, in denen jeweils ab einem Feuchtigkeitsgrenzwert $rH_G$ im Heizbetrieb eine Regelung auf eine konstante Kapazität des Feuchtesensorelementes erfolgte, sind im Rahmen der vorliegenden Erfindung auch alternative Varianten des Heizbetriebes realisierbar. An der Art und Weise der Ermittlung der Umgebungstemperatur ändert sich in diesen Fällen jedoch grundsätzlich nichts, d.h. auch in diesen alternativen Verfahren wird letztlich aus der im Heizbetrieb erforderlichen Heizleistung und der gemessenen Sensoranordnungstemperatur die Umgebungstemperatur ohne separat erforderliches Temperatursensorelement bestimmt.

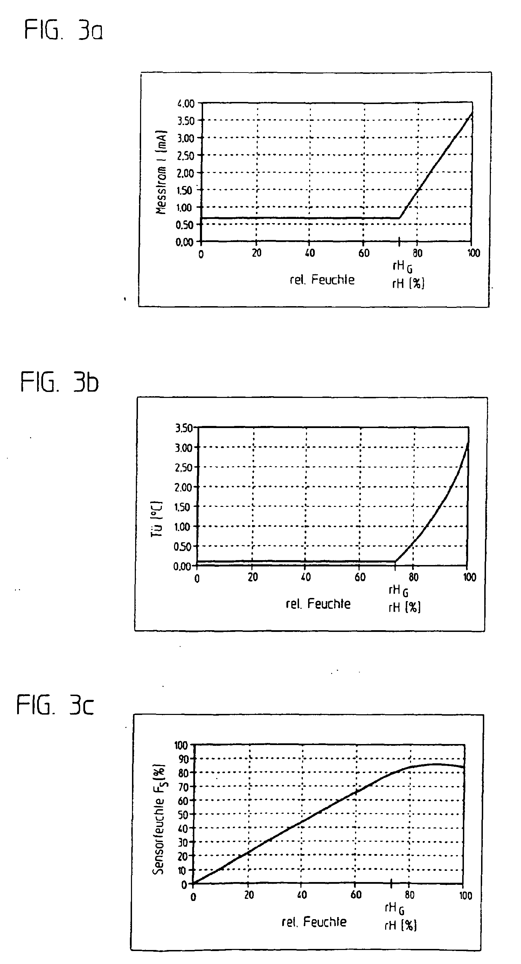

Anhand der Figuren 3a - 3c sei eine zweite Ausführungsvariante des Heizbetriebes erläutert; in den verschiedenen Diagrammen sind hierbei die jeweils gleichen Größen gegeneinander aufgetragen wie in den bereits oben erläuterten Figuren 2a - 2c.

In der zweiten Ausführungsform wird nunmehr im Heizbetrieb ab einem Feuchtigkeitsgrenzwert $rH_G$ nicht auf eine konstante Sensorfeuchte geregelt, d.h. nicht auf eine konstante Kapazität des vorgesehenen Feuchtesensorelementes. Es ist im Unterschied zur ersten Variante hingegen vorgesehen, den Messstrom I im Heizbetrieb ab dem Feuchtigkeitsgrenzwert $rH_G$ = 75% bis zur Maximalfeuchte rHmax = 100% linear mit der jeweiligen relativen Feuchte rH ansteigen zu lassen; der vorgesehene Zusammenhang zwischen Messstrom I und relativer Feuchte rH ist in Fig. 3a dargestellt. Der daraus resultierende Verlauf der Sensorerwärmung, d.h. der Verlauf der Übertemperatur $T_ü$ sowie der Sensorfeuchte $F_S$ gegenüber der relativen Feuchte rH ist wiederum in den Figuren 3b und 3c veranschaulicht.

Im Fall einer derartigen Ausgestaltung des Heizbetriebs resultiert als Vorteil ein verringerter Aufwand, da auf Seiten der Folgeelektronik insbesondere keine Mittel zur Regelung des Heizstromes erforderlich sind.

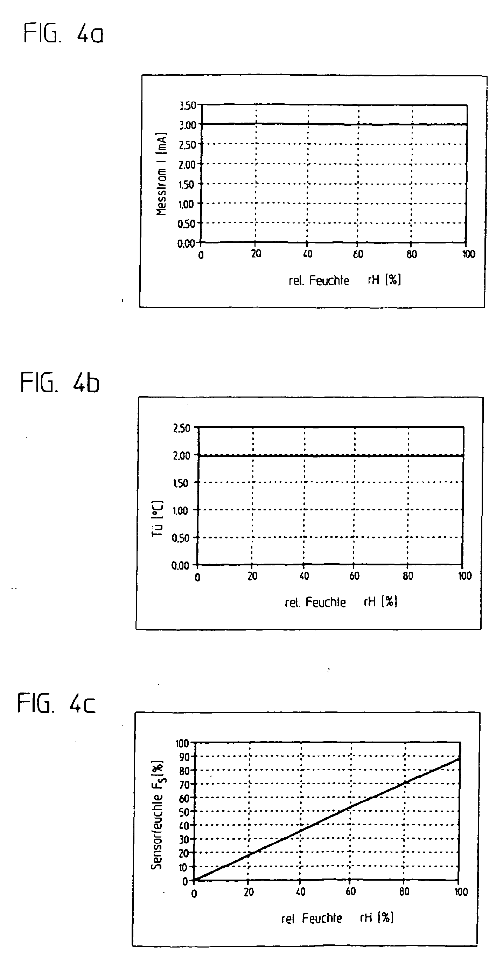

Eine dritte Möglichkeit zur Ausgestaltung des Heizbetriebes im Rahmen der vorliegenden Erfindung sei abschließend anhand der Figuren 4a - 4c erläutert. In den verschiedenen Diagrammen sind wiederum die gleichen Größen gegeneinander aufgetragen wie in den vorherigen Diagrammen.

Es ist nunmehr vorgesehen, die Sensoranordnung über den gesamten Feuchtemessbereich ungeregelt zu beheizen, was über einen konstanten Messstrom I erfolgt, wie in Figur 4a dargestellt. Entsprechend resultiert eine konstante Übertemperatur $T_ü$ der Sensoranordnung wie in Figur 4b dargestellt sowie eine linear über den gesamten Feuchtemessbereich ansteigende Sensorfeuchte $F_S$ gemäß Figur 4c. Als Vorteil dieses Verfahrens ergibt sich ebenfalls wieder ein verringerter Gesamtaufwand.

Neben der eingangs erläuterten Variante des Heizbetriebes existieren im Rahmen der vorliegenden Erfindung somit weitere Ausgestaltungsmöglichkeiten.

**Patentansprüche**

1. Verfahren zur Feuchtemessung, insbesondere zur Bestimmung der relativen Feuchte im Hochfeuchtebereich, mit einer Sensoranordnung bestehend aus einem kapazitiven Feuchtesensorelement, einem Temperatursensorelement sowie einem Heizelement, wobei zumindest in einem Teil des Feuchtemessbereichs das Feuchtesensorelement beheizt wird,

**dadurch gekennzeichnet, dass**
über eine Folgeelektronik (20) aus der im Heizbetrieb erforderlichen Heizleistung sowie der gemessenen lokalen Sensoranordnungstemperatur ($T_S$) ferner die Umgebungstemperatur ($T_a$) ermittelt wird, um darüber die relative Feuchte (rH) zu bestimmen.

2. Verfahren nach Anspruch 1, **dadurch gekennzeichnet, dass** ab einem vorgegebenen Feuchtigkeitsgrenzwert ($rH_G$) in einem Heizbetrieb gearbeitet wird.

3. Verfahren nach Anspruch 2, **dadurch gekennzeichnet, dass** im Heizbetrieb das Feuchtesensorelement (11) derart geregelt beheizt wird, dass eine konstante Kapazität des Feuchtesensorelementes (11) resultiert.

4. Verfahren nach Anspruch 2, **dadurch gekennzeichnet, dass** im Heizbetrieb das Feuchtesensorelement (11) mit einem linear mit der relativen Feuchte (rH) ansteigenden Heizstrom beheizt wird.

5. Verfahren nach Anspruch 1, **dadurch gekennzeichnet, dass** das Feuchtesensorelement (11) über den gesamten Feuchtemessbereich beheizt wird.

6. Verfahren nach Anspruch 1, **dadurch gekennzeichnet, dass** das Temperatursensorelement (11) auch als Heizelement verwendet wird.

7. Verfahren nach mindestens einem der Ansprüche 1 - 6, **dadurch gekennzeichnet, dass** zur Bestimmung der Umgebungstemperatur ($T_a$) aus der Heizleistung und der lokalen Sensortemperatur ($T_S$) die Übertemperatur ($T_ü$) des Heizelements bestimmt wird, die aus der Heizleistung resultiert, so dass sich die Umgebungstemperatur ($T_a$) gemäß folgender Beziehung ergibt:

$$T_a = T_S - T_ü$$

mit
$T_a :=$ Umgebungstemperatur
$T_S :=$ gemessene Sensortemperatur
$T_ü :=$ Übertemperatur des Heizelementes, resultierend aus der anliegenden Heizleistung im Heizbetrieb

8. Verfahren nach Anspruch 7, **dadurch gekennzeichnet, dass** zur Bestimmung der Übertemperatur ($T_ü$) aus der Heizleistung der jeweilige Messstrom (I) durch das Temperatursensorelement (12) bestimmt wird, so dass sich die Übertemperatur ($T_ü$) ergibt gemäß

$$T_ü = R * TK * I^2 * EK,$$

mit:

R := gemessener Widerstand des Temperatursensorelementes bei der Temperatur T
TK := Temperaturkoeffizient des verwendeten Temperatursensorelementes
I := Messstrom durch das Temperatursensorelement
EK := Eigenerwärmungskoeffizient des Temperatursensorelementes

9. Verfahren nach einem der vorgehenden Ansprüche, **dadurch gekennzeichnet, dass** das Beheizen des Feuchtesensorelementes (11) sowie die Signalverarbeitung über eine der Sensoranordnung (10) nachgeordnete Folgeelektronik (20) erfolgt.

10. Verfahren nach Anspruch 9, **dadurch gekennzeichnet, dass** von der Folgeelektronik (20) die Umgebungstemperatur ($T_a$) sowie die relative Feuchte (rH) ausgangsseitig zur Weiterverarbeitung bereitgestellt wird.

11. Anordnung zur Feuchtemessung, insbesondere zur Bestimmung der relativen Feuchte im Hochfeuchtebereich, bestehend aus

- einer Sensoranordnung mit einem kapazitiven Feuchtesensoreiement, einem Temperatursensorelement sowie einem Heizelement und

- einer Folgeelektronik, über die zumindest in einem Teil des Feuchtemessbereichs das Feuchtesensorelement beheizbar ist,

**dadurch gekennzeichnet, dass**

die Folgeelektronik (20) derart ausgebildet ist, dass aus der im Heizbetrieb erforderlichen Heizleistung sowie der gemessenen lokalen Sensoranordnungstemperatur ($T_S$) ferner die Umgebungstemperatur ($T_a$) ermittelbar ist, um darüber die relative Feuchte (rH) zu bestimmen.

12. Anordnung nach Anspruch 11, **dadurch gekennzeichnet, dass** die Folgeelektronik (20) derart ausgebildet ist, dass die Sensoranordnung (10) ab einem vorgegebenen Feuchtigkeitsgrenzwert ($rH_G$) in einem Heizbetrieb betreibbar ist.

13. Anordnung nach Anspruch 12, **dadurch gekennzeichnet, dass** die Folgeelektronik (20) derart ausgebildet ist, dass im Heizbetrieb das Feuchtesensorelement (11) derart geregelt beheizbar ist, dass eine konstante Kapazität (C) des Feuchtesensorelementes (11) resultiert.

14. Anordnung nach Anspruch 12, **dadurch gekennzeichnet, dass** die Folgeelektronik (20) derart ausgebildet ist, dass im Heizbetrieb das Feuchtesensorelement (11) mit einem linear mit der relativen Feuchte ansteigenden Heizstrom (I) beheizbar ist.

15. Anordnung nach Anspruch 11, **dadurch gekennzeichnet, dass** die Folgeelektronik (20) derart ausgebildet ist, dass über den gesamten Feuchtemessbereich das Feuchtesensorelement (11) beheizbar ist.

16. Anordnung nach Anspruch 11, **dadurch gekennzeichnet, dass** ein Bauelement gleichzeitig als Temperatursensorelement (12) und als Heizelement verwendbar ist.

17. Anordnung nach Anspruch 11, **dadurch gekennzeichnet, dass** die Sensoranordnung (10) auf einem Trägersubstrat (13) ein kapazitives Feuchtesensorelement (11) sowie ein mindestens ein Widerstandselement umfasst, wobei das Widerstandselement als Temperatursensorelement (12) und optional als Heizelement fungiert.

18. Anordnung nach Anspruch 11, **dadurch gekennzeichnet, dass** die der Sensoranordnung (10) nachgeordnete Folgeelektronik (20) mindestens einen Mikroprozessor (23) umfasst, über den das Beheizen des Feuchtesensorelementes (11) als auch die Signalverarbeitung und Bereitstellung der Ausgangssignale erfolgt.

### Claims

1. Method for humidity measurement, in particular for determining the relative humidity in the high-humidity range, having a sensor arrangement comprising a capacitive humidity sensor element, a temperature sensor element and also a heating element, the humidity sensor element being heated at least in a part of the humidity measuring range, **characterised in that**
in addition the ambient temperature ($T_a$) is determined via a downstream electronic unit (20) from the heating power required in the heating operation and also from the measured local sensor arrangement temperature ($T_S$) in order to determine therefrom the relative humidity (rH).

2. Method according to claim 1, **characterised in that** the process takes place in a heating operation from a prescribed humidity limiting value (rHG).

3. Method according to claim 2, **characterised in that** the humidity sensor element (11) is heated in a controlled manner in the heating operation such that a constant capacitance of the humidity sensor element (11) results.

4. Method according to claim 2, **characterised in that** the humidity sensor element (11) is heated in the heating operation with a heating current which increases linearly with the relative humidity (rH).

5. Method according to claim 1, **characterised in that** the humidity sensor element (11) is heated over the entire humidity measuring range.

**6.** Method according to claim 1, **characterised in that** the temperature sensor element (11) is used also as heating element.

**7.** Method according to at least one of the claims 1 - 6, **characterised in that** the excess temperature ($T_{\ddot{u}}$) of the heating element which results from the heating power is determined in order to determine the ambient temperature ($T_a$) from the heating power and from the local sensor temperature ($T_s$) so that the ambient temperature ($T_a$) is produced according to the following relationship:

$$T_a = T_S - T_{\ddot{u}}$$

with
$T_a$ = ambient temperature
$T_s$ = measured sensor temperature
$T_{\ddot{u}}$ = excess temperature of the heating element resulting from the heating power applied in the heating operation.

**8.** Method according to claim 7, **characterised in that** the respective measuring current (I) is determined by the temperature sensor element (12) in order to determine the excess temperature ($T_{\ddot{u}}$) from the heating power so that the excess temperature ($T_{\ddot{u}}$) is produced according to

$$T_{\ddot{u}} = R * TK * I^2 * EK$$

with:

R = measured resistance of the temperature sensor element at the temperature T
TK = temperature coefficient of the temperature sensor element which is used
I = measuring current through the temperature sensor element
EK = intrinsic heating coefficient of the temperature sensor element.

**9.** Method according to one of the preceding claims, **characterised in that** the heating of the humidity sensor element (11) and also the signal processing is effected via a downstream electronic unit (20) which is subsequent to the sensor arrangement (10).

**10.** Method according to claim 9, **characterised in that** the ambient temperature ($T_a$) and also the relative humidity (rH) is provided by the downstream electronic unit (20) on the output side for further processing.

**11.** Arrangement for humidity measurement, in particular for determining the relative humidity in the high-humidity range, comprising

- a sensor arrangement with a capacitive humidity sensor element, a temperature sensor element and also a heating element, and
- a downstream electronic unit, via which the humidity sensor element can be heated at least in a part of the humidity measuring range,

**characterised in that**
the downstream electronic unit (20) is configured in such a manner that in addition the ambient temperature ($T_a$) can be determined from the heating power required in the heating operation and also from the measured local sensor arrangement temperature ($T_s$) in order to determine therefrom the relative humidity (rH).

**12.** Arrangement according to claim 11, **characterised in that** the downstream electronic unit (20) is configured in such a manner that the sensor arrangement (10) can be operated in a heating operation from a prescribed humidity limiting value ($rH_G$).

**13.** Arrangement according to claim 12, **characterised in that** the downstream electronic unit (20) is configured in such a manner that the humidity sensor element (11) can be heated in a controlled manner in the heating operation such that a constant capacitance (C) of the humidity sensor element (11) results.

14. Arrangement according to claim 12, **characterised in that** the downstream electronic unit (20) is configured in such a manner that the humidity sensor element (11) can be heated in the heating operation with a heating current (I) which increases linearly with the relative humidity.

15. Arrangement according to claim 11, **characterised in that** the downstream electronic unit (20) is configured in such a manner that the humidity sensor element (11) can be heated over the entire humidity measuring range.

16. Arrangement according to claim 11, **characterised in that** one component can be used simultaneously as temperature sensor element (12) and as heating element.

17. Arrangement according to claim 11, **characterised in that** the sensor arrangement (10) comprises, on a carrier substrate (13), a capacitive humidity sensor element (11) and also at least one resistance element, the resistance element functioning as temperature sensor element (12) and optionally as heating element.

18. Arrangement according to claim 11, **characterised in that** the downstream electronic unit (20) which is subsequent to the sensor arrangement (10) comprises at least one microprocessor (23), via which the heating of the humidity sensor element (11) and also the signal processing and provision of output signals is effected.


**Revendications**

1. Procédé de mesure d'humidité, en particulier pour déterminer l'humidité relative dans une atmosphère hautement humide, à l'aide d'un agencement de capteurs constitué d'un élément capteur d'humidité capacitif, d'un élément capteur de température et d'un élément chauffant, l'élément capteur d'humidité étant chauffé au moins dans une partie de la plage de mesure d'humidité,
   **caractérisé par le fait que**
   l'on détermine en outre, par l'intermédiaire d'une électronique séquentielle (20), la température ambiante ($T_a$) à partir de la puissance de chauffage nécessaire en mode de chauffage et à partir de la température locale mesurée ($T_S$) de l'agencement de capteurs, afin de déterminer l'humidité relative (rH).

2. Procédé selon la revendication 1, **caractérisé par le fait que** l'on travaille en mode de chauffage à partir d'une valeur limite d'humidité ($rH_G$) prédéterminée.

3. Procédé selon la revendication 2, **caractérisé par le fait qu'**en mode de chauffage, l'élément capteur d'humidité (11) est chauffé de manière régulée telle qu'il en résulte une capacité constante de l'élément capteur d'humidité (11).

4. Procédé selon la revendication 2, **caractérisé par le fait qu'**en mode de chauffage, le capteur d'humidité (11) est chauffé avec un courant de chauffage qui augmente de façon linéaire avec l'humidité relative (rH).

5. Procédé selon la revendication 1, **caractérisé par le fait que** le capteur d'humidité (11) est chauffé sur la totalité de la plage de mesure d'humidité.

6. Procédé selon la revendication 1, **caractérisé par le fait que** l'élément capteur de température (12) est également utilisé comme élément chauffant.

7. Procédé selon au moins une des revendications 1 à 6, **caractérisé par le fait que** pour déterminer la température ambiante ($T_a$) à partir de la puissance de chauffage et de la température de capteur locale ($T_S$), on détermine l'élévation de température ($T_\ddot{U}$) de l'élément chauffant qui résulte de la puissance chauffage, de sorte que l'on obtient la température ambiante ($T_a$) selon la relation suivante :

$$T_a = T_S - T_{+U}$$

avec

$T_a$ := température ambiante

$T_S$ := température de capteur mesurée

$T_{\ddot{U}}$ = élévation de température de l'élément chauffant, résultant de la puissance de chauffage appliquée en mode de chauffage.

8. "Procédé selon la revendication 7, **caractérisé par le fait que** pour déterminer l'élévation de température ($T_{\ddot{U}}$) à partir de la puissance de chauffage, on détermine le courant de mesure (I) respectif traversant le capteur de température (12), de sorte que l'on obtient l'élévation de température ($T_{\ddot{U}}$) selon

$$T_{\ddot{U}} = R * TK * I^2 * EK,$$

avec

R := résistance mesurée du capteur de température à la température T

TK := coefficient de température du capteur de température utilisé

I := courant de mesure traversant le capteur de température

EK := coefficient d'échauffement propre du capteur de température

9. Procédé selon une des revendications précédentes, **caractérisé par le fait que** le chauffage du capteur d'humidité (11) ainsi que le traitement de signal sont effectués par l'intermédiaire d'une électronique séquentielle (20) disposée à la suite de l'agencement de capteurs (10).

10. Procédé selon la revendication 9, **caractérisé par le fait que** l'électronique séquentielle (20) fournit côté sortie la température ambiante ($T_a$) et l'humidité relative (rH), en vue de leur traitement ultérieur.

11. Agencement de mesure d'humidité, en particulier pour déterminer l'humidité relative en atmosphère hautement humide, comprenant

- un agencement de capteurs avec un élément capteur d'humidité capacitif, un élément capteur de température et un élément chauffant, et
- une électronique séquentielle, par l'intermédiaire de laquelle l'élément capteur d'humidité peut être chauffé au moins dans une partie de la plage de mesure d'humidité,

**caractérisé par le fait que**

l'électronique séquentielle (20) est agencée de manière à permettre de déterminer en outre la température ambiante ($T_a$) à partir de la puissance de chauffage nécessaire en mode de chauffage et de la température locale mesurée ($T_S$) de l'agencement de capteurs, afin de déterminer ainsi l'humidité relative (rH).

12. Agencement selon la revendication 11, **caractérisé par le fait que** l'électronique séquentielle (20) est agencée de manière telle que l'agencement de capteurs (10) peut être exploité en mode de chauffage à partir d'une valeur limite d'humidité ($rH_G$) prédéterminée.

13. Agencement selon la revendication 12, **caractérisé par le fait que** l'électronique séquentielle (20) est agencée de manière à ce qu'en mode de chauffage le capteur d'humidité (11) puisse être chauffé de façon régulée telle qu'il en résulte une capacité (C) constante du capteur d'humidité (11).

14. Agencement selon la revendication 12, **caractérisé par le fait que** l'électronique séquentielle (20) est agencée de manière telle qu'en mode de chauffage le capteur d'humidité (11) puisse être chauffé avec un courant de chauffage (I) qui augmente de façon linéaire avec l'humidité relative.

15. Agencement selon la revendication 11, **caractérisé par le fait que** l'électronique séquentielle (20) est agencée de manière telle que le capteur d'humidité (11) puisse être chauffé sur la totalité de la plage de mesure d'humidité.

16. Agencement selon la revendication 11, **caractérisé par le fait qu'**un composant peut être utilisé en même temps comme élément capteur de température (12) et comme élément chauffant.

**17.** Agencement selon la revendication 11, **caractérisé par le fait que** l'agencement de capteurs (10) est disposé sur un substrat support (13) et comprend un élément capteur d'humidité (11) capacitif et au moins un élément résistant, l'élément résistant fonctionnant comme capteur de température (12) et, de manière optionnelle, comme élément chauffant.

**18.** Agencement selon la revendication 11, **caractérisé par le fait que** l'électronique séquentielle (20) disposée à la suite de l'agencement de capteurs (10) comprend au moins un microprocesseur (23), par l'intermédiaire duquel sont effectués le chauffage du capteur d'humidité (11) ainsi que le traitement de signal et la délivrance des signaux de sortie.

FIG. 1

EP 1 505 387 B1

FIG. 2a

FIG. 2b

FIG. 2c

FIG. 3a

FIG. 3b

FIG. 3c

FIG. 4a

FIG. 4b

FIG. 4c